# EUROPEAN PATENT APPLICATION

(11) **EP 1 241 129 A1**
(43) Date of publication of application: **18.09.2002**
(21) Application number: 02005545.5
(22) Date of filing: 11.03.2002
(51) Int. Cl.: B67D 5/32, B01D 17/02

(54) **Draining device for fuel tank sumps**

(30) Priority: 12.03.2001 IT ME010005
(71) Applicant: Italiano, Salvatore, 98057 Milazzo (ME) (IT); Italiano, Antonio Eugenio, 98057 Milazzo (ME) (IT)
(72) Inventor: Italiano, Salvatore, 98057 Milazzo (ME) (IT); Italiano, Antonio Eugenio, 98057 Milazzo (ME) (IT)

(57) **Abstract**

SUMMARY OF THE INVENTION AND MAIN DIAGRAMM

The new electromeccanic device (10+11+13+14), is capable of detecting water and impurity , when they to deposit of fuels sumptanks (2), and to permet the automatic discharge (15).

*The new device, for thanks still not used*, he is formed of tow tubes, comunicatings a different levels with the sumptank (2). The upper tube ,he is connected with a little electrode container(11), where are placed four pair electrodes, to fixed a determinated levels (H1-H2-H3-H4). The electrodes are connected with four distinct electronic devices (14), capables to pilot the pneumatic valves (9), by electromagnetic valves (12).
Device D1 to pilot the pneumatic valve (10) normally closed(N.C.)by timer T.
" D2 " " " " " (8-9)normally open (N.O.)-upper level H2
" D3 " " " " " (8-9) " " (N.O.)-lower level H3
" D4 to " the alimentation timer T
The lower tube Ts, is functioned like drainage by-pass. Consequently the level variations in the sumptank, are equal as the electrode container (11).To a better action device, to want water filled the sumptank, as to equal level H1 of the little container.When the water level reaches the level H4, to electric joint pair electrodes D4 and the alimentation timer T. When the water level reaches the level H1, to electric joint the pair electrodes E1, so excite the timer T and device D1; consequently, is open the pneumatic valve V1 (by electromagnetic valve Ev1). When the water level come down below the level H1, stopped electric joint E1 , but the Timer T delayte the closing the valve V1. When the water level come down below the level H4, stopped the timer alimentation, so closes the valve V1 *In the new device for thanks in active function, the tube (6) is connected in by pass to siphon tube(3), while the tube (7), is connected to botton tank (1).* The water volume included to the level H1-H4 is proportional a upward part to siphon (3) , so ,all impurity of bottom sumptank (2) to come discharged.

## Description

### CURRENT DEVICES FOR WATER AND IMPURITY DRAINAGE FROM FUELS TANKS.

*Manual drainage -* This operation are normally effectued by manul comand valve.

The valve is plased on discharge tube , (direct or by siphon).

*Meccanic authomatic device. -* Device is placed in by-pass to the discharge siphon tube. Drainage automatic action, fonded in the different specific fluid gravity (Dual Gravity Drainer - Patent :Armstrong - USA) . Device "DGD"is constitued as a floating that moves a balance, wich he open or closed one bottom-valve.

*Interred fuels tanks drainage -* With chemical detector , periodically drainage is effectued by manual pump..

### 9. Courent devides - features analyisis

*Manual drainage -* A prevalently operation used to the refinery or fuels depositis. Water and impurity are draineted when the water level reaches 30 - 40 cm. to bottom tank. The long-time impurity presence to bottom tank, formed permanent dregs; that requires expansive maintenances. Moreover, cause delayed closig of the manual valve (20 sec.), he comes discharged much fuel ,with additional costs.

*Meccanic authomatic devices* They havent this inconvenientes.

It is necessary to place one filter, for stopped impurity draineted.

This filter to require greater maintenances, cause a rise impurity of bottomtank.

It's impossible to place this device under the level of bottom tank.

Device "DGD" requires a complicated regulation because they are different specific gravities and different pressures- capacities.Therefore, device "DGD" has very instable and infavourable action, because the critic working of bottom valve .

*Interred fuels tanks drainage* Is increased the water presence in the petrol-pump and motor damages.

### INNOVATION TARGET(see Table n.1)

The new device, is capable of detecting water and impurities, when they to deposit of sumptank(2) and permet the automatic drainage, without any obstruction to discharge tube (6).

The rivelation device of water, formed by special rustless platinum-iridio electtrodes, placed on a little container (11) (comunicating with the sumptank).

The electrode -container is parallel connected to drainage tube (6) D: 1-2", with a little tube (3/8"-1/2"- 3/4" for siphon D:8"-6"-4" ) , so the impurity discharge pass only discharge tube (6). While the volume of semidistillate water remaines costant ( oscillationes about level H1-H4).

The electrodes are connected to electronic devices (14), that is placed in separate box.

In the electrode container (11) there are placed four pair electrodes.It's necessary, beforehand filled the sumptank and the electrode container, with water (or semidistillate water) at to level H1 (low E1 electrodes) . So that, next water or impurity to deposit of bottom sumptank (2), to coused a hidrostatic push, which to raise the water level in the electrode container.

When the water riches H4 level, to closed the alimentation T timer ; then when water riches H1 level, to excite D1device and T timer. Consequently, them open electrovalve (13) > pneumatic valve (10). When the water level come down H4 level, stopped the electric connetion betwwen the pair electrodes E4, they disconnected the alimentation timer T, consequently, them open electrovalve Ev1(13) > pneumatic valve V1(10).

*The pair electrodes E1-E4 and the timer T they consent alwais to discharged costant water volumes (H1-H4). Therefore it's possible to measure:the drained water and to control the regular function valve (10).*

The electtrodes are immersed only fuel or semidistillate water and they are always cleaned. Moreover is negligible the electrode currente (Imax: 25 microAmpere).The pair electrodes E2, to active device D2 > Ev1>V1, when water reaches H2 level (cause D1 or cable connection accident).

When water level come down the level H3 ( blockade or V1 water loss), the pair electrodes E3, they active device D3>Ev2-3>V2-3,. It's possible three different device applicationes.

### Devices for tanks stinn not usede

The comunicating tubes (6-7) hare directly connected with tha sumptank(2).

### Devices for tanks in active function

The comunicating tubes (6-7) hare connected by existent siphon tube (3) and the bottontank (1).

To control the variation water level, the extremities of electrode container, are connected in by-pass with a little transparent tube,. The electrodes, are placed by particular screwited container, with water tap and special packing ,that permet the control or replacement electtrode, without any water loss.

### Devices for interred tanks (see Tab.N.2)

The water and impurity presence of bottom tank , they are detecting by two electrodes (9) , placed of extremity tube discharge (2)*( a special no- return valve provided (8).* The electrodes are connected to external electronic device (11), by connection cable (1), that pilot special electric pump(12) to conneckted a discharge tube . Water and impurity they are discharged in separate special thank.

Other components: control-table(10);; protection tube with magnetic fixing to sumptank(5); packing and special bordered tap (3); device container (13).

### OPERATING THEORY TO ELECTRONIC- DEVICE (see Tab.N.3)

The electronic circuit to linear amplificator, to employ the transistor T1 (BC213-PNP) to pilot final transistor darlinghton T2 (BDX33 NPN), for alimentation electromagnetic valves Ev1(13); Ev2-3 (12) by relè R and timer T.

Other components details: R1=390 Kilohm - R2= 82 ohm - R3=1,2 Kilohm - C1.120 KpF - C2:270 microfarad - D:1N4007 - Ev1-2-3 : microelectric valve 12 V- 40 mA.

(semi-distillatewater resistance : 50 - 200 Megaohm).

The electrodes are alimentated from separate alimentation (galvanic separator), they to allow regular intrinsic security (Ex-i).

The electronic devices are placed in security and separated container.

It's possible to connect all containers ,to central command table, by radio cable syistem.

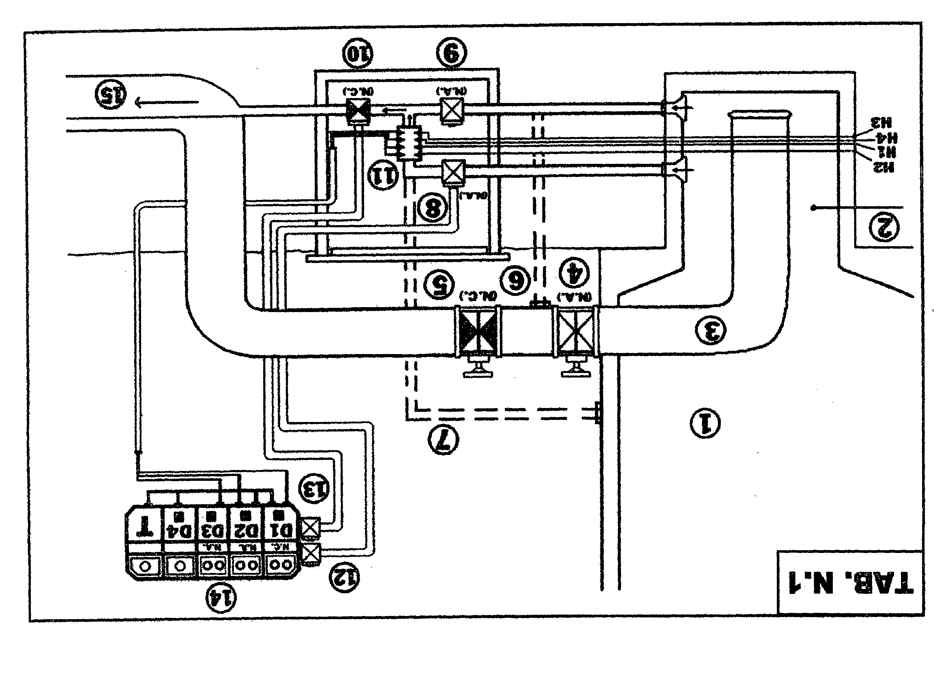

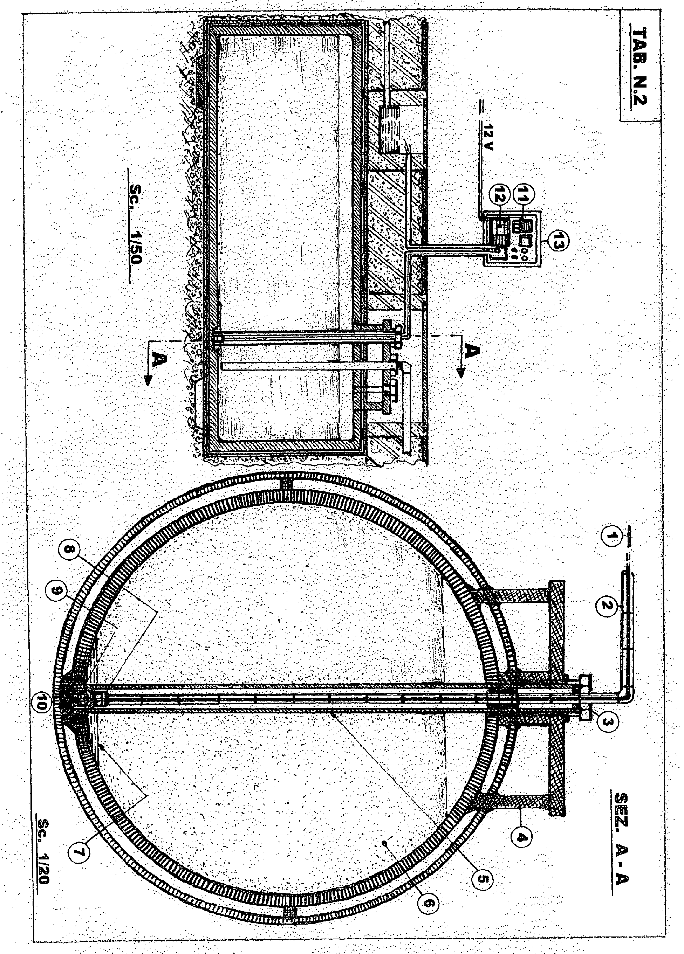

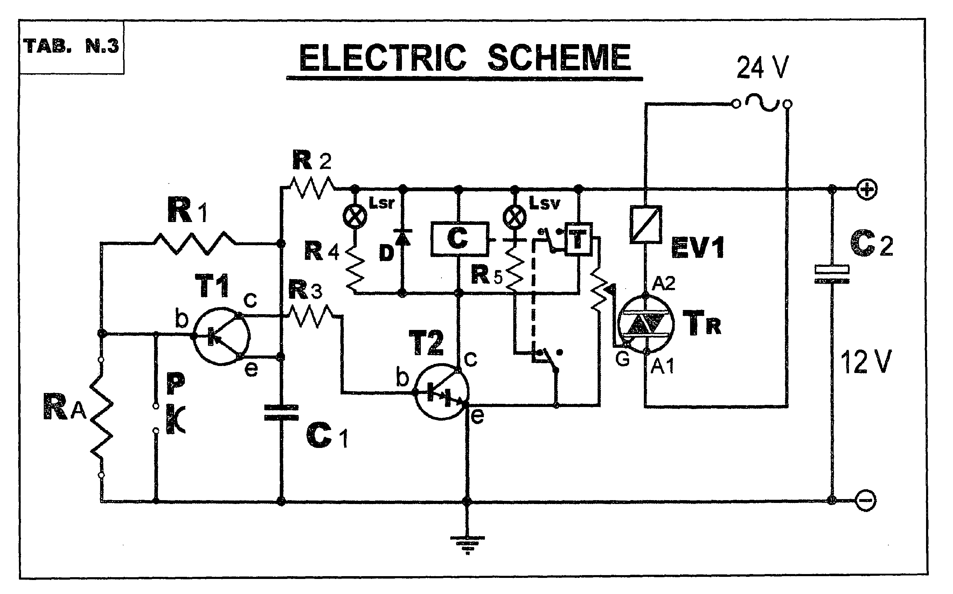

## Claims

1. Electronic circuit capable of detecting water, impurity located in the sumptanks, by special platinum-iridium electrodes, placed in separated container comunicating with the sumptank.

2. Aforesaid electronic circuit, capable to pilot the pneumatic valve, by electromagnetic valve.

3. Special drainage system by two comunicating tubes with sumptank (direct connetion or by siphon tube).

4. Electrodecontainer,( befored filled with pre-established semi-distillate water volume) with :four pair electrodes, reduced connectin to drainage tube. This system to consent a full impurity drainage by siphon tube.

5. Sump service for the valve - electrocontainer control.

6. Special electrode-stand, with water tap, to consent the electrode control, without any water loss.

7. Aforesaid electronic circuit, excited by two platinum-iridium electrodes, placed in the interrrated botton tanks (for station service- civil-industrial use). The electronic circuit to command a pump for water- impurity drainage in separate special tank.
